# EUROPÄISCHE PATENTSCHRIFT

(11) **EP 3 339 700 B1**
(45) Veröffentlichungstag und Bekanntmachung des Hinweises auf die Patenterteilung: **22.07.2020**
(21) Anmeldenummer: 17207619.2
(22) Anmeldetag: 15.12.2017
(51) Int. Cl.: F16K 27/02, F16K 31/06, F16K 1/36, F16K 25/04

(54) **ELEKTROMAGNETISCHES VENTIL**
ELECTROMAGNETIC VALVE
VANNE ÉLECTROMAGNÉTIQUE

(30) Priorität: 23.12.2016 DE 102016015520
(43) Veröffentlichungstag der Anmeldung: 27.06.2018
(73) Patentinhaber: Andreas Stihl AG & Co. KG, 71336 Waiblingen (DE)
(72) Erfinder: Levien, Patrick, 73061 Ebersbach a. d. Fils (DE); Mayer, Felix, 71332 Waiblingen (DE); Maier, Georg, 71332 Waiblingen (DE)
(74) Vertreter: Wasmuth, Rolf

(56) Entgegenhaltungen:
- EP-A1- 2 500 610
- DE-A1-102008 017 764
- US-A- 4 848 727
- US-A1- 2004 144 940

## Beschreibung

Die Erfindung betrifft ein elektromagnetisches Ventil mit einer Ventilkammer, die mindestens eine Zuflussöffnung zum Zuführen einer Flüssigkeit und mindestens einen Ausgang zum Abführen der Flüssigkeit aufweist. Das Ventil weist eine Ventilkammer, einen Ventilsitz und ein dem Ventilsitz zugeordnetes Ventilglied auf, wobei bei einem durch das Ventilglied geschlossenen Ventilsitz die Strömungsverbindung zwischen der Zuflussöffnung und dem Ausgang des Ventils unterbrochen ist. Das Ventilglied ist an einer Ankerplatte gehalten, die von einem elektromagnetischen Antrieb gegen einen Endanschlag zu bewegen ist, der von einer ersten Anschlagfläche gebildet ist.

Ein derartiges Ventil ist aus der DE 10 2008 017 764 A1 bekannt. Die Kraft auf die Ankerplatte ist abhängig von einem Luftspalt zwischen dem magnetischen Joch und der Ankerplatte. Verschleißt der Endanschlag der Ankerplatte, kann der Luftspalt geringer werden. Dadurch kann es zu einem magnetischen Kleben und daher zu Fehlfunktionen bis zum Ausfall des elektromagnetischen Ventils kommen.

Aus der US 4 848 727 A ist ein elektromagnetisches Ventil mit einem Ventilglied bekannt, das auch als Dämpfungselement zwischen einem Eisenkern eines Magneten und einer Ankerplatte genutzt werden kann.

Aus der US 2004/144940 A1 ist ein elektromagnetisches Ventil bekannt, dessen Ankerplatte mehrere Vorsprünge aufweist.

Aus der EP 2 500 610 A1 ist ein elektromagnetisches Ventil bekannt, das über die dem Magneten zugewandte Seite einer Ankerplatte übersteht.

Der Erfindung liegt die Aufgabe zugrunde, ein elektromagnetisches Ventil der gattungsgemäßen Art derart weiterzubilden, dass über eine lange Betriebsdauer eine sichere Funktionalität des Ventils gewährleistet ist.

Die Aufgabe wird erfindungsgemäß nach den Merkmalen des Anspruchs 1 gelöst.

Der Ankerplatte wird eine zweite Anschlagfläche zugeordnet, die nach einem Verschleiß der ersten Anschlagfläche einen nachgeordneten Endanschlag bildet. Dabei ist vorgesehen, den nachgeordneten Endanschlag so auszubilden, dass bei Anlage der Ankerplatte an dem nachgeordneten Endanschlag ein magnetischer Luftspalt verbleibt. Ein "magnetisches Kleben" der Ankerplatte an dem magnetischen Joch der elektromagnetischen Antriebseinheit wird so vermieden. Die Lebensdauer des elektromagnetischen Ventils wird erhöht. Der zweite Endanschlag hat beispielsweise gegenüber einem verstärkt ausgeführten Endanschlag den Vorteil, dass sich ein Ventil mit einem ersten Endanschlag und einem zweiten Endanschlag feiner justieren lässt.

Darüber hinaus kann der nachgeordnete Endanschlag den Verschleiß des ersten Endanschlages durch mineralische Partikel reduzieren. Mineralische Partikel können beispielsweise durch Verunreinigungen von Kraftstoff in einem Kraftstoffsystem bis zu einem elektromagnetischen Ventil gelangen.

Die mineralischen Partikel führen zum Verschleiß des ersten Anschlages, der aus der Anschlagpaarung Metall/Metall besteht. Zudem können sich Partikel in den zweiten elastischen Anschlag einlagern. Wenn das zweite elastische Element komprimiert wird, nimmt dieses mit zunehmendem Verschleiß des ersten Anschlages zunehmend die Kraft vom ersten Anschlag weg. Es wird also eine zusätzliche Rückstellkraft durch die Komprimierung des Vitonanschlages (Viton®) erzeugt, welche die Schließzeiten in Summe nahezu konstant hält.

Derartige mineralische Partikel können sich in das zweite elastische Anschlagelement einlagern. Das elastische Anschlagelement des nachgeordneten Endanschlags stoppt die bewegte Ankerplatte. Vorteilhaft wird die Ankerplatte dämpfend gestoppt. Das elastische Material des Anschlagelementes kann eine zusätzliche Rückstellkraft erzeugen. Vorteilhaft ist das elastische Material Viton, welches einem magnetischen Kleben entgegenwirkt. Das elastische Anschlagelement, vorzugsweise ein Vitonelement, ist gegen Betriebsmittel wie Kraftstoff oder ein Kraftstoff/Luft-Gemisch resistent und führt nicht zu einem Kleben oder Anhaften des elastischen Anschlagelementes am Endanschlag. Alternativ kann auch eine Plastikscheibe oder eine Kunststoffbeschichtung vorgesehen sein.

Hervorzuheben ist, dass der erste Anschlag immer vor dem zweiten, nachgeordneten Anschlag wirksam ist, wodurch ein optimaler Betrieb des elektromagnetischen Ventils gewährleistet ist.

Erfindungsgemäß ist der ersten Anschlagfläche des ersten Endanschlags ein erstes Anschlagelement an der Ankerplatte zugeordnet. Der zweiten Anschlagfläche des magnetischen Joches bzw. des elektromechanischen Antriebsgliedes ist ein zweites Anschlagelement zugeordnet, welches ebenfalls an der Ankerplatte ausgebildet ist. Die zweite Anschlagfläche und das zweite Anschlagelement bilden den nachgeordneten Endanschlag. Im Ausführungsbeispiel wird das zweite Anschlagelement von der Ankerplatte getragen.

Das erste Anschlagelement und die zugeordnete erste Anschlagfläche bilden vorteilhaft einen flächigen Endanschlag. Dieser flächige Endanschlag ist vorteilhaft als metallischer Endanschlag ausgebildet, der insbesondere magnetisch leitend ist. Dabei kann die erste Anschlagfläche zweckmäßig als Ringfläche ausgebildet sein. Somit weist die gesamte Anschlagfläche eine kreisförmige bzw. ringförmige Fläche auf.

Das zweite Anschlagelement der Ankerplatte ist ein elastisches Anschlagelement an der Ankerplatte.

Erfindungsgemäß kommt nach einem Initialverschleiß des ersten Anschlags bzw. der ersten Anschlagfläche der zweite Anschlag bzw. die zweite Anschlagfläche in Eingriff. Die Ausbildung ist so vorgesehen, dass durch das zweite Anschlagelement eine zusätzliche Rückstellkraft bereitgestellt ist. Sobald der zweite Anschlag wirksam ist, verlangsamt sich der Verschleiß des ersten oder ist insbesondere vollständig gestoppt, sobald das zweite Anschlagelement in Eingriff kommt.

Das zweite Anschlagelement ist vorteilhaft von der Ankerplatte getragen. Vorteilhaft sind das zweite Anschlagelement des nachgeordneten Endanschlages und das Ventilglied des elektromagnetischen Ventils einteilig ausgebildet. Dabei ist das Ventilglied zweckmäßig aus einem elastischen Material gefertigt, insbesondere aus Viton. Das Ventilglied ist dabei zugleich als Dichtung genutzt; die Dichtung unterbricht den Kraftstofffluss zwischen Zuflussöffnung und Auslass.

Vorteilhaft durchragt das elastische Ventilglied die Ankerplatte. Dabei liegt vorteilhaft ein erstes Ende des Ventilgliedes dem Ventilsitz zugewandt und ein zweites Ende des Ventilgliedes dem magnetischen Joch zugewandt und bildet das zweite Anschlagelement.

Das erste Anschlagelement und die erste Anschlagfläche sind unter Bildung eines Luftspaltes zum Kern des magnetischen Joches Teil des magnetischen Kreises der elektromagnetischen Antriebseinheit. Bei Anlage des ersten Anschlagelementes der Ankerplatte an der ersten Anlagefläche der elektromagnetischen Antriebseinheit ist der magnetische Kreis unter Aufrechterhaltung eines Luftspaltes geschlossen. Dies wird durch den zweiten Anschlag gewährleistet. Bei geschlossenem magnetischen Kreis der elektromagnetischen Antriebseinheit ist die Strömungsverbindung zwischen der Zuflussöffnung und dem Ausgang des Ventils offen; das Ventil ist geöffnet. Das Ventil ist vorteilhaft ein stromlos geschlossenes Ventil. Das Ventil kann alternativ auch ein stromlos offenes Ventil sein. Ein stromlos offenes Ventil bedeutet, dass bei nicht geschlossenem Magnetkreis die Zuflussöffnung zum Ausgang des Ventils offen ist und somit ein Flüssigkeitsfluss beispielsweise Kraftstoff durch das Ventil möglich ist.

Die Ankerplatte mit dem Ventilglied ist beim Ausführungsbeispiel gegen die Kraft einer Rückstellfeder zu bewegen. Nach Verschleiß der ersten Anschlagfläche unterstützt das elastische Anschlagelement des vorteilhaft nachgeordneten Endanschlags die Rückstellfeder beim Lösen der Ankerplatte vom magnetischen Joch.

Das zweite Anschlagelement des nachgeordneten Endanschlages ist zwischen einer Oberseite der Ankerplatte und einer Unterseite der Ankerplatte formschlüssig eingeknüpft. Zweckmäßig wird das elastische Element in die Ankerplatte eingespritzt.

Weitere Merkmale der Erfindung ergeben sich aus den weiteren Ansprüchen, der Beschreibung und der Zeichnung, in der nachfolgend ein erfindungsgemäßes elektromagnetisches Ventil in verschiedenen Betriebszuständen dargestellt ist. Es zeigen:
- Fig. 1: in einer isometrischen Explosionsdarstellung die einzelnen Bauteile eines erfindungsgemäßen elektromagnetischen Ventils,
- Fig. 2: einen Axialschnitt durch ein montiertes elektromagnetisches Ventil,
- Fig. 3: in vergrößerter Darstellung eine Ventileinheit des elektromagnetischen Ventils nach Fig. 2,
- Fig. 4: einen Axialschnitt durch ein montiertes elektromagnetisches Ventil gemäß Fig. 2 mit offenem Ventilsitz,
- Fig. 5: in vergrößerter Darstellung den offenen Ventilsitz des elektromagnetischen Ventils nach Fig. 4,
- Fig. 6: einen Axialschnitt durch ein montiertes elektromagnetisches Ventil gemäß Fig. 2 mit einem geöffnetem Ventilsitz und Anlage einer Ankerplatte an einem nachgeordneten Endanschlag,
- Fig. 7: in vergrößerter Darstellung den offenen Ventilsitz nach Fig. 6 mit an einem nachgeordneten Endanschlag anliegender Ankerplatte.

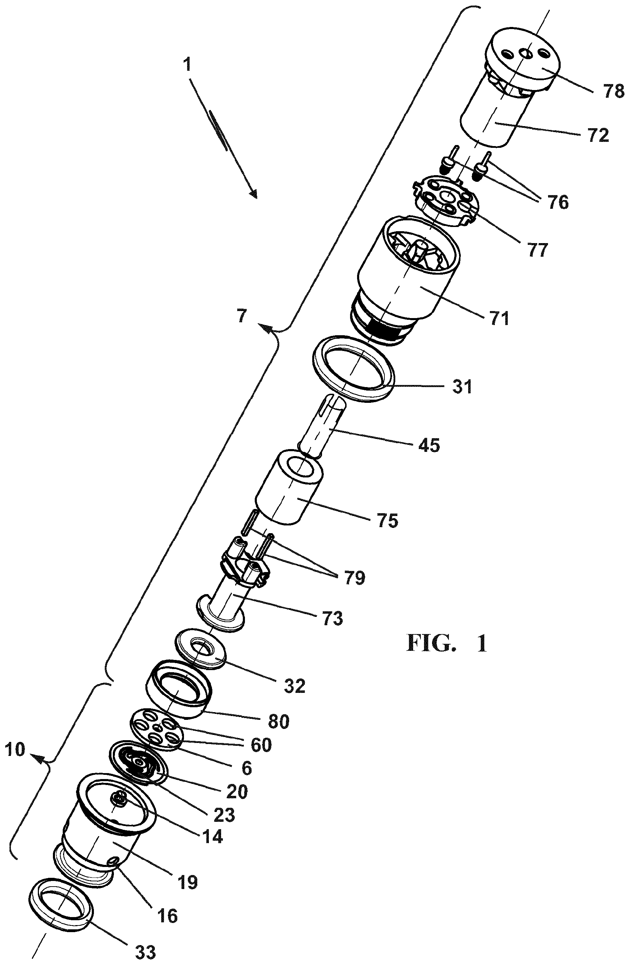

Die in Fig. 1 dargestellte isometrische Explosionsdarstellung zeigt ein elektromagnetisches Ventil 1 mit seinen einzelnen Bauteilen. Dabei lässt sich das elektromagnetische Ventil 1 unterteilen in eine elektromagnetische Antriebseinheit 7 und eine Ventileinheit 10.

Die elektromagnetische Antriebseinheit 7 besteht im Wesentlichen aus einem äußeren Gehäuse 71, welches vorzugsweise zylindrisch ausgebildet ist. Das äußere Gehäuse 71 zeigt einen inneren Kern 72, der zusammen mit dem äußeren Gehäuse ein magnetisches Joch bildet. Das äußere Gehäuse 71 und der Kern bestehen vorzugsweise aus einem magnetisierbaren Material, insbesondere aus Weicheisen.

Der innere Kern 72 durchragt einen Spulenträger 73, der in einem Ringspalt 74 des magnetischen Jochs aufgenommen ist. Der Spulenträger 73 trägt eine Elektrospule 75, deren Enden mit elektrischen Anschlusspolen 76 verbunden sind. Die Anschlusspole sind bevorzugt in einer Anschlussplatte 77 gehalten, deren Gestalt aus Fig. 1 hervorgeht. Die Anschlusspole 76 durchragen einen Gehäusedeckel 78, der das äußere Gehäuse 71 verschließt.

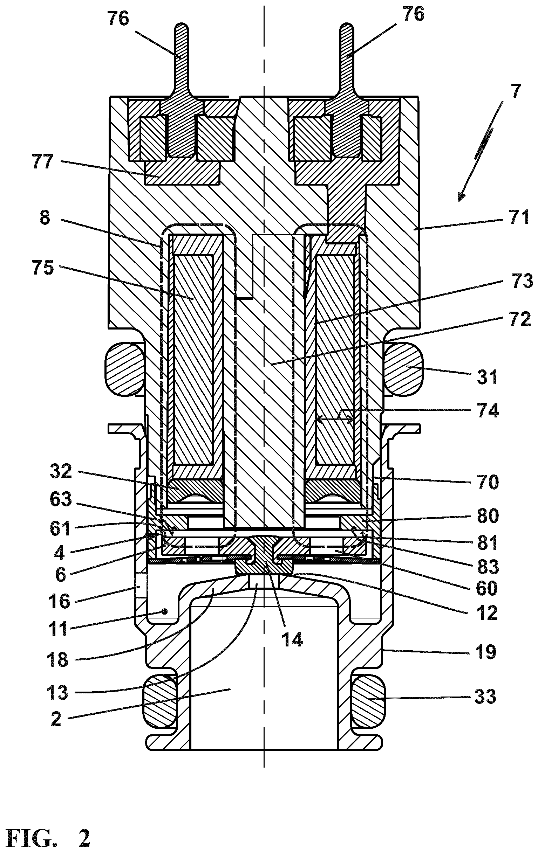

Das der Ventileinheit 10 zugewandte Ende 70 der Antriebseinheit 7 trägt einen Abschlussring 80, der Teil des magnetischen Kreises 8 ist. Der Abschlussring 80 wird auf das Ende 70 aufgeschoben und fixiert. An dem Anschlussring 80 ist eine äußere Ringfläche 83 (Fig. 2) ausgebildet. Die äußere Ringfläche 83 weist eine erste Anschlagfläche 81 für eine Ankerplatte 6 auf. Die erste Anschlagfläche 81 bildet einen Anschlag für die Ankerplatte 6.

Die Ankerplatte 6 weist ein erstes Anschlagelement 61 auf, welches im gezeigten Ausführungsbeispiel eine Ringfläche 63 bildet. Die Ringfläche 63 liegt der ersten Anschlagfläche 81 gegenüber und bildet zusammen mit dieser einen ersten Endanschlag 4.

In der Ankerplatte 6 sind mehrere Öffnungen als Durchlässe 60 ausgebildet. Die Durchlässe verbessern die Beweglichkeit der flüssigkeitsumspülten Ankerplatte 6 in der Ventilkammer 11.

Die Bauteile der elektromagnetischen Antriebseinheit 7 umfassen somit - wie die Fig. 1 und 2 zeigen - das äußere Gehäuse 71 mit einem inneren Kern 72 zur Bildung eines magnetischen Jochs. Die Elektrospule 75 ist auf dem Spulenträger 73 gehalten und über elektrische Kontaktstifte 79 mit einer Anschlussplatte 77 verbunden, in der zwei Anschlusspole 76 gehalten sind. Die Anschlusspole 76 durchragen den Gehäusedeckel 78.

Das äußere Gehäuse 71 weist einen gestuften Außendurchmesser auf, wobei der Gehäuseabschnitt mit dem geringeren Außendurchmesser einen Dichtring 31 trägt. Mit dem Dichtring 31 kann die Ventileinheit in ein nicht näher gezeigtes Aufnahmegehäuse dicht eingebaut werden.

Zur Abdichtung des Spulenträgers 73 mit der Elektrospule 75 ist der Ringspalt 74 vorteilhaft mit einer weiteren Dichtung 32 verschlossen.

Die Ventileinheit 10 umfasst einen Ventiltopf 19 mit einem Topfboden 18. Der Topfboden weist eine Ventilöffnung 13 auf. Vorteilhaft ist die Ventilöffnung 13 im Zentrum des Topfbodens 18 ausgebildet. Die Ventilöffnung 13 stellt eine Strömungsverbindung zwischen einer Zuflussöffnung 16 des Ventils 1 und einem Ausgang 2 des Ventils 1 her.

Der Topfboden 18 der Ventileinheit 10 ist auf der Innenseite der Ventilkammer 11 konvex gestaltet und bildet einen Ventilsitz 12 für ein Ventilglied 14. Das Ventilglied 14 besteht insbesondere aus einem elastischen Material, insbesondere einem Elastomerwerkstoff und ist in der Ankerplatte 6 gehalten. Vorteilhaft besteht das Ventilglied 14 aus Viton®.

Das Ventilglied 14 ist in der Ankerplatte 6 in eine zentrale Öffnung 62 eingeknöpft. Das Ventilglied 14 aus elastischem Material durchragt die Ankerplatte 6. Vorteilhaft liegt ein erstes Ende 15 des Ventilglieds 14 dem Ventilsitz 12 zugewandt. Ein zweites Ende 17 des Ventilglieds 14 aus elastischem Material liegt dem Kern 72 des magnetischen Jochs zugewandt. Das zweite Ende 17 des Ventilglieds 14 bildet - wie nachstehend noch beschrieben wird - ein elastisches Anschlagelement als nachgeordneten Endanschlag 5. Zur Bildung des elastischen Anschlagelementes kann die Ankerplatte umspritzt werden, insbesondere mit Viton umspritzt werden. Alternativ kann das elastische Anschlagelement auf der Ankerplatte 6 gehalten sein, beispielsweise festgeklebt sein oder ähnliches. Bei solch einer alternativen Befestigung muss das elastische Ventilglied 14 die Ankerplatte 6 nicht durchragen.

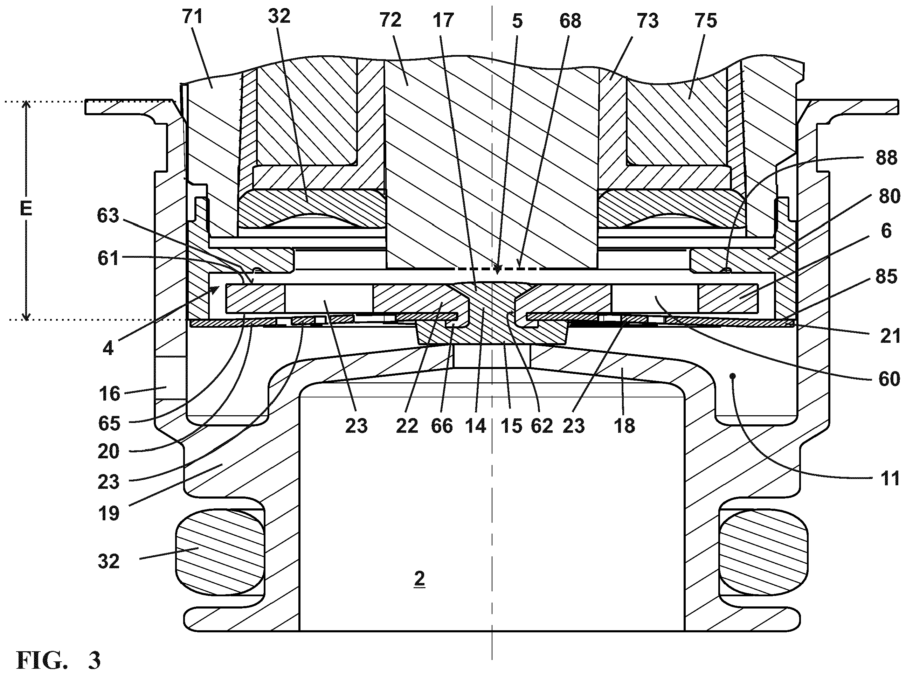

Das dem Ventilsitz 12 zugewandte Ende 15 des Ventilglieds 14 übergreift den Rand der zentralen Öffnung 62 und kann vorteilhaft zugleich eine Rückstellfeder 20 in ihrer Lage an der Ankerplatte 6 sichern. Die Rückstellfeder 20 ist in Fig. 1 isometrisch dargestellt und besteht aus einem äußeren Rand 21 und einem Zentralabschnitt 22. Wie die Figuren 1 und 3 zeigen, ist der Zentralabschnitt 22 mit dem äußeren Rand 21 über spiralförmig angeordnete Federarme 23 miteinander verbunden.

Wie in Fig. 3 gezeigt, ist an der Unterseite 65 der Ankerplatte 6 der Zentralabschnitt 22 der Rückstellfeder 20 formschlüssig gehalten. Vorzugsweise ist ein Öffnungsrand 66 der zentralen Öffnung 62 umgebördelt und hält den Zentralabschnitt 22 der Rückstellfeder 20 formschlüssig an der Ankerplatte.

Der äußere Rand 21 der Rückstellfeder 20 liegt auf einem Auflagerand 85 des Abschlussrings 80 auf, der durch eine Ringschulter gebildet ist. Das Ende 70 der Antriebseinheit 7 trägt den Abschlussring 80. Über die Einschubtiefe E des Endes 70 in den Ventiltopf 19 wird die Rückstellfeder 20 vorgespannt. Die Vorspannung der Rückstellfeder 20 bestimmt die Schließkraft des Ventilgliedes 14 auf dem Ventilsitz 12.

Der Ventiltopf 19 trägt auf seinem Außenumfang eine Dichtung 33.

Wie sich aus den Figuren 2 und 3 ergibt, liegt das Ventilglied 14 unter der Wirkung der Rückstellfeder 20 mit einer von der Rückstellfeder 20 bereitgestellten Schließkraft auf dem Ventilsitz 12 auf, so dass die Strömungsverbindung zwischen der Zuflussöffnung 16 und dem Ausgang 2 des Ventils 1 unterbrochen ist. Wenn das Ventilglied 14 auf dem Ventilsitz 12 aufliegt, ist das Ventil 1 geschlossen.

Wird die Elektrospule 75 bestromt, so wird die Ankerplatte 6 magnetisch in Richtung der Pfeile 35 angehoben, wobei die Ankerplatte 6 an dem ersten Endanschlag 4 zu liegen kommt. Zwischen der magnetisch angezogenen Ankerplatte 6 und der Stirnseite des Kerns 72 des magnetischen Joches verbleibt ein Luftspalt 9. Dieser Luftspalt 9 dient zur Vermeidung des magnetischen Klebens nach Abschalten der Bestromung. Ein magnetisches Kleben würde zu langen Schließzeiten führen. Ein geschlossener Magnetkreis kann gezielt vermieden werden.

Der ersten Anschlagfläche 81 ist ein erstes Anschlagelement 61 an der Ankerplatte 6 zugeordnet. Dabei bilden das erste Anschlagelement 61 der Ankerplatte 6 und die zugeordnete erste Anschlagfläche 81 der elektromagnetischen Antriebseinheit 7 einen flächigen Endanschlag 4. Der flächige Endanschlag 4 ist als metallischer Endanschlag ausgebildet. Sowohl die Ankerplatte 6 als auch der Abschlussring 80 bestehen aus einem magnetisierbaren Metall, sind aber zweckmäßig nicht magnetisch.

Die Schließzeit des elektromagnetischen Ventils 1 hängt unter anderem von der Anlage der Ankerplatte 6 an der metallischen ersten Anschlagfläche 81 ab. Um der Adhäsion der Ankerplatte 6 an der Anschlagfläche 81 entgegenzuwirken, ist in der Anschlagfläche 81 eine Rille 88 (Fig. 3, 5 und 7) eingebracht. Die Rille 88 ist vorteilhaft radial so positioniert, dass sie im Bereich der Durchlässe 60 in der Ankerplatte 6 liegt. Durch die Durchlässe 60 in der Ankerplatte 6 gelangt Kraftstoffzulauf in die Rille 88. Der Kraftstoff dringt durch die Rille 88 in den Spalt zwischen Ankerplatte 6 und der Anschlagfläche 81 und löst die Adhäsion auf. Verlängerte Schließzeiten können so vermieden werden.

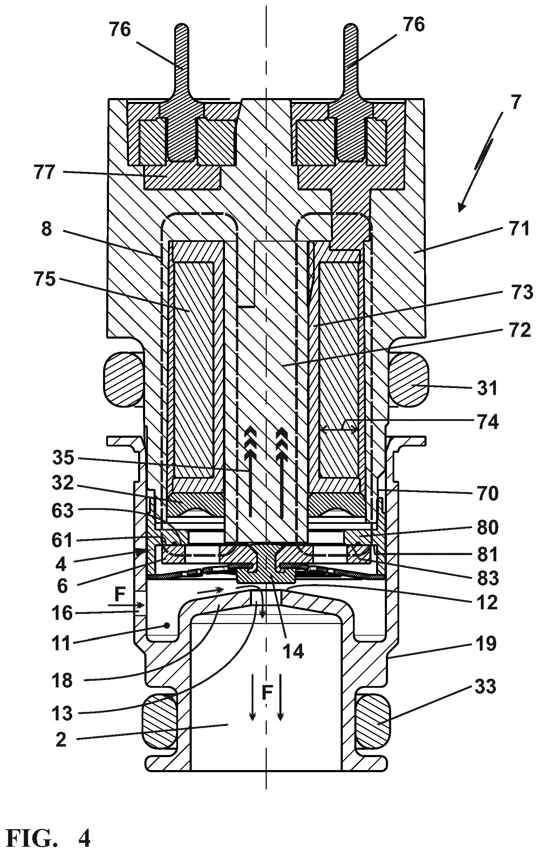

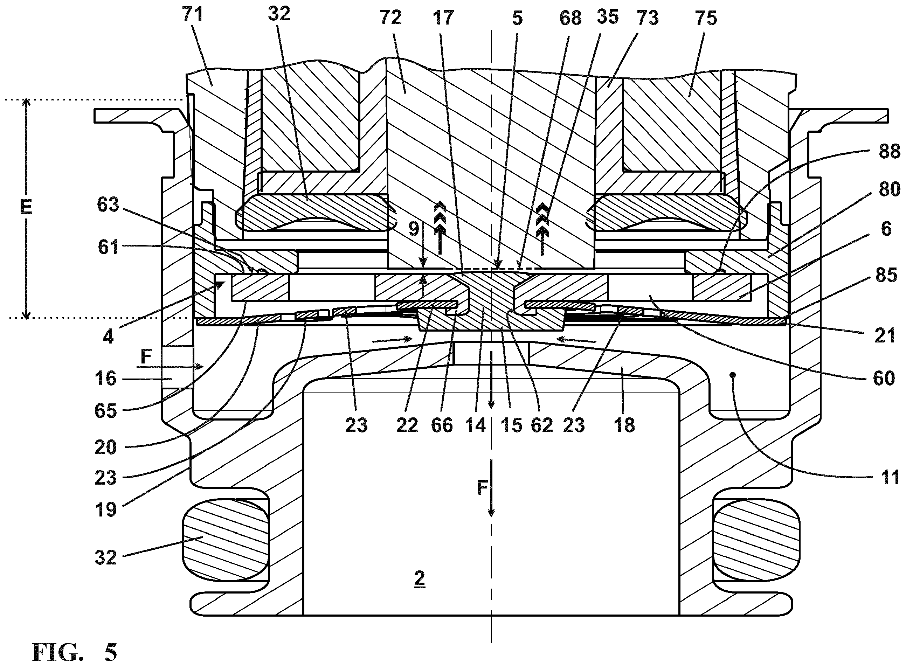

In den Figuren 4 und 5 ist das elektromagnetische Ventil 1 bestromt dargestellt. Die elektromagnetische Antriebseinheit 7 hebt die Ankerplatte 6 in Richtung der Pfeile 35 an, bis das als Ringfläche 63 ausgebildete erste Anschlagelement 61 der Ankerplatte 6 auf der ersten Anschlagfläche 81 der elektromagnetischen Antriebseinheit 7 zur Anlage kommt. Dabei verbleibt der Luftspalt 9 (Fig. 5).

Bei geöffneter Ventilöffnung 13 strömt eine Flüssigkeit, vorzugsweise Kraftstoff, in Richtung der Pfeile F in Flussrichtung durch die Zuströmöffnung 16 in die Ventilkammer 11 und über die Ventilöffnung 13 zur Abströmöffnung des Ausgangs 2. Dies ist insbesondere in den Fig. 4 und 5 dargestellt.

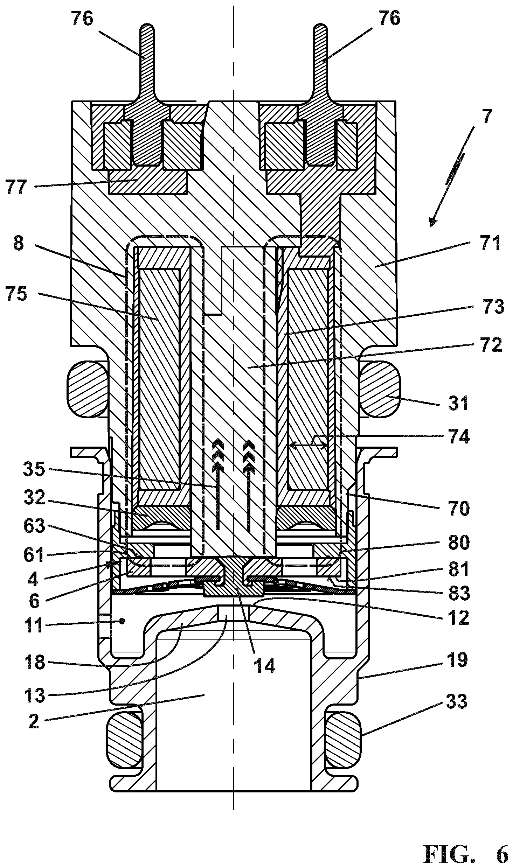

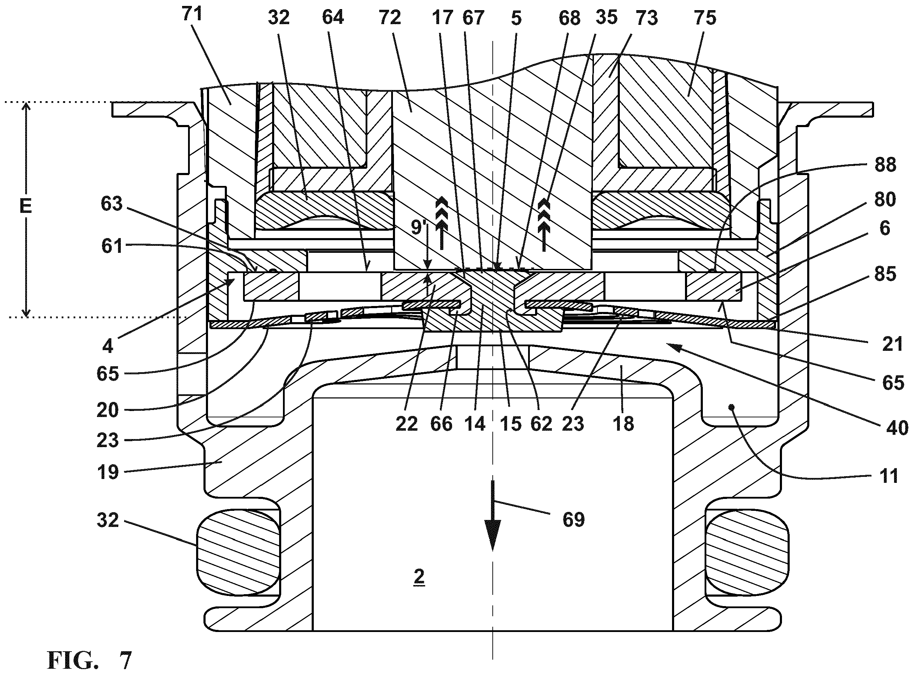

In der Darstellung nach den Figuren 6 und 7 ist das elektromagnetische Ventil 1 bestromt; wie aus der vergrößerten Darstellung gemäß Fig. 7 ersichtlich, ist aufgrund eines metallischen Verschleißes des ersten Endanschlages 4 der Luftspalt 9 kleiner geworden. Der Luftspalt 9' ist kleiner als der Luftspalt 9. Der Ankerplatte 6 ist eine zweite Anschlagfläche 68 zugeordnet, die einen in Bewegungsrichtung der Ankerplatte 6 in Richtung der Pfeile 35 nachgeordneten Endanschlag 5 bildet. Dieser zweiten Anschlagfläche 68 an der elektromagnetischen Antriebseinheit 7 ist ein zweites Anschlagelement 67 zugeordnet. Dieses zweite Anschlagelement 67 ist vorteilhaft ein elastisches Anschlagelement, welches insbesondere einteilig mit dem Ventilglied 14 ausgebildet ist.

Dieses zweite - insbesondere elastische - Anschlagelement 67 ist auf einer Oberseite 64 der Ankerplatte und einer Unterseite 65 der Ankerplatte formschlüssig gehalten. Das Ventilglied besteht insbesondere aus Viton®

Aufgrund der Auslenkung des Zentralabschnitts 22 der Rückstellfeder 20 arbeitet die elektromagnetische Antriebseinheit 7 gegen eine Rückstellkraft in Pfeilrichtung 69, die der Schließrichtung des Ventilgliedes 14 entspricht.

In bevorzugter Ausgestaltung ist vorgesehen, die Ankerplatte 6, die Rückstellfeder 20 und das Ventilglied 14 als zusammengesetzte Baugruppe 40 auszubilden. Die Baugruppe 40 bildet eine vormontierte Baugruppe.

Aufgrund der Rückstellfeder 20 wirkt auf das Ventilglied 14 permanent eine Rückstellkraft in Pfeilrichtung 69. Wird die elektromagnetische Antriebseinheit 7 abgeschaltet, schließt das Ventil 1 unter der Wirkung der Rückstellfeder 20. Das Ventil ist vorzugsweise ein stromlos geschlossenes Ventil 1.

## Patentansprüche

1. Elektromagnetisches Ventil mit einer Ventilkammer (11), die eine Zuflussöffnung (16) zum Zuführen einer Flüssigkeit und mindestens einen Ausgang (2) zum Abführen der Flüssigkeit aufweist, mit einem Ventilsitz (12) und einem dem Ventilsitz (12) zugeordneten Ventilglied (14), wobei bei einem durch das Ventilglied (14) verschlossenen Ventilsitz (12) die Strömungsverbindung zwischen der Zuflussöffnung (16) und dem Ausgang (2) des Ventils (1) unterbrochen ist, und das Ventilglied (14) an einer Ankerplatte (6) gehalten ist, die von einer elektromagnetischen Antriebseinheit (7) gegen einen Endanschlag (4) zu bewegen ist, der von einer ersten Anschlagfläche (81) gebildet ist, wobei der Ankerplatte (6) eine zweite Anschlagfläche (68) zugeordnet ist, wobei der ersten Anschlagfläche (81) ein erstes Anschlagelement (61) an der Ankerplatte (6) und der zweiten Anschlagfläche (68) ein zweites Anschlagelement (67) an der Ankerplatte (6) zugeordnet ist, wobei das erste Anschlagelement (61) und die zugeordnete erste Anschlagfläche (81) einen ersten Endanschlag (4) bilden, wobei das zweite Anschlagelement (67) ein elastisches Anschlagelement an der Ankerplatte (6) ist,
wobei die zweite Anschlagfläche (68) nach einem vorgegebenen Verschleiß der ersten Anschlagfläche (81) einen nachgeordneten Endanschlag (5) bildet, und dass nach einem Initialverschleiß der ersten Anschlagfläche (81) die zweite Anschlagfläche (68) in Eingriff kommt und durch das zweite Anschlagelement (67) eine zusätzliche Rückstellkraft bereitgestellt ist,
**dadurch gekennzeichnet, dass** der erste Endanschlag (4) aus der Anschlagspaarung Metall/Metall besteht.

2. Ventil nach Anspruch 1,
**dadurch gekennzeichnet, dass** das erste Anschlagelement (61) und die zugeordnete erste Anschlagfläche (81) einen flächigen Endanschlag (4) bilden.

3. Ventil nach Anspruch 2,
**dadurch gekennzeichnet, dass** der flächige Endanschlag (4) als metallischer Endanschlag ausgebildet ist.

4. Ventil nach Anspruch 1,
**dadurch gekennzeichnet, dass** die erste Anschlagfläche (81) als Ringfläche (83) ausgebildet ist.

5. Ventil nach Anspruch 1,
**dadurch gekennzeichnet, dass** sich der Verschleiß der ersten Anschlagfläche (81) verlangsamt oder vollständig stoppt, sobald das zweite Anschlagelement (67) in Eingriff kommt.

6. Ventil nach Anspruch 4,
**dadurch gekennzeichnet, dass** das zweite Anschlagelement (67) und das Ventilglied (14) einteilig ausgebildet sind.

7. Ventil nach Anspruch 1,
**dadurch gekennzeichnet, dass** das Ventilglied (14) aus einem elastischen Material besteht und die Ankerplatte (6) durchragt, wobei ein erstes Ende (15) des Ventilglieds (14) dem Ventilsitz (12) zugewandt liegt und ein zweites Ende (17) des Ventilglieds (14) das zweite Anschlagelement (67) bildet.

8. Ventil nach einem der Ansprüche 1 bis 7,
**dadurch gekennzeichnet, dass** das erste Anschlagelement (61) und die erste Anschlagfläche (81) unter Bildung eines Luftspaltes (9) Teil des magnetischen Kreises (8) der elektromagnetischen Antriebseinheit (7) ist.

9. Ventil nach Anspruch 8,
**dadurch gekennzeichnet, dass** bei Anlage des ersten Anschlagelementes (61) der Ankerplatte (6) an der ersten Anlagefläche (81) der magnetische Kreis (8) der elektromagnetischen Antriebseinheit (7) unter Bildung eines Luftspaltes (9) geschlossen ist.

10. Ventil nach Anspruch 9,
**dadurch gekennzeichnet, dass** bei geschlossenem magnetischen Kreis (8) der elektromagnetischen Antriebseinheit (7) der Ausgang (2) des Ventils (1) offen ist.

11. Ventil nach einem der Ansprüche 1 bis 10,
**dadurch gekennzeichnet, dass** die Ankerplatte (6) gegen die Kraft einer Rückstellfeder (20) zu bewegen ist.

12. Ventil nach einem der Ansprüche 1 bis 11,
**dadurch gekennzeichnet, dass** das zweite Anschlagelement (67) auf einer Oberseite (64) der Ankerplatte (6) und auf einer Unterseite (65) der Ankerplatte (6) formschlüssig gehalten ist.

## Claims

1. Electromagnetic valve with a valve chamber (11) having at least one inflow opening (16) for the supply of a liquid and at least one outlet (2) for discharging the liquid, and with a valve seat (12) and a valve member (14) assigned to the valve seat (12), wherein, if the valve seat (12) is closed by the valve member (14), the flow connection between the inflow opening (16) and the outlet (2) of the valve (1) is interrupted and the valve member (14) is held at an anchor plate (6) designed for being moved by an electromagnetic drive unit (7) against an end stop (4) represented by a first stop face (81),
wherein a second stop face (68) is assigned to the anchor plate (6),
wherein a first stop element (61) at the anchor plate (6) is assigned to the first stop face (81) and a second stop element (67) at the anchor plate (6) is assigned to the second stop face (68),
wherein the first stop element (61) and the associated first stop face (81) form a first end stop (4), wherein the second stop element (67) is an elastic stop element at the anchor plate (6), wherein the second stop face (68) forms a secondary end stop (5) after a predetermined wear of the first stop face (81), and
wherein, after an initial wear of the first stop face (81), the second stop face (68) comes into engagement and an additional restoring force is provided by the second stop element (67),
**characterised in that** the first end stop (4) consists of the metal/metal stop pairing.

2. Valve according to claim 1,
**characterised in that** the first stop element (61) and the associated first stop face (81) form a planar end stop (4).

3. Valve according to claim 2,
**characterised in that** the planar end stop (4) is designed as a metallic end stop.

4. Valve according to claim 1,
**characterised in that** the first stop face (81) is designed as an annular surface (83).

5. Valve according to claim 1,
**characterised in that** the wear of the first stop face (81) slows down or stops completely as soon as the second stop element (67) comes into engagement.

6. Valve according to claim 4,
**characterised in that** the second stop element (67) and the valve member (14) are designed as a single part.

7. Valve according to claim 1,
**characterised in that** the valve member (14) consists of an elastic material and extends through the anchor plate (6), wherein a first end (15) of the valve member (14) faces the valve seat (12) and a second end (17) of the valve member (14) forms the second stop element (67).

8. Valve according to any of claims 1 to 7,
**characterised in that** the first stop element (61) and the first stop face (81) are a part of the magnetic circuit (8) of the electromagnetic drive unit (7) while forming an air gap (9).

9. Valve according to claim 8,
**characterised in that** the magnetic circuit (8) of the electromagnetic drive unit (7) is closed while forming an air gap (9) if the first stop element (61) of the anchor plate (6) contacts the first stop face (81).

10. Valve according to claim 9,
**characterised in that** the outlet (2) of the valve (1) is open if the magnetic circuit (8) of the electromagnetic drive unit (7) is closed.

11. Valve according to any of claims 1 to 10,
**characterised in that** the anchor plate (6) has to be moved against the force of a return spring (20).

12. Valve according to any of claims 1 to 11,
**characterised in that** the second stop element (67) is positively held on a top side (64) of the anchor plate (6) and on an underside (65) of the anchor plate (6).

## Revendications

1. Vanne électromagnétique comprenant une chambre de vanne (11) qui présente une ouverture d'amenée (16) pour amener un liquide et au moins une sortie (2) pour évacuer le liquide, comprenant un siège de vanne (12) et un organe de vanne (14) associé au siège de vanne (12), dans laquelle quand un siège de vanne (12) est fermé par l'organe de vanne (14), la liaison d'écoulement entre l'ouverture d'amenée (16) et la sortie (2) de la vanne (1) est interrompue, et l'organe de vanne (14) est maintenu sur une plaque d'induit (6) qui peut être déplacée par une unité d'entraînement électromagnétique (7) contre une butée terminale (4) qui est formée par une première surface de butée (81), dans laquelle une deuxième surface de butée (68) est associée à la plaque d'induit (6), dans laquelle un premier élément de butée (61) sur la plaque d'induit (6) est associé à la première surface de butée (81) et un deuxième élément de butée (67) sur la plaque d'induit (6) est associé à la deuxième surface de butée (68), dans laquelle le premier élément de butée (61) et la première surface de butée (81) associée forment une première butée terminale (4), dans laquelle le deuxième élément de butée (67) est un élément de butée élastique sur la plaque d'induit (6), dans laquelle la deuxième surface de butée (68) forme après une usure prédéfinie de la première surface de butée (81) une butée terminale (5) disposée à la suite, et qu'après une usure initiale de la première surface de butée (81), la deuxième surface de butée (68) intervient et une force de rappel supplémentaire est fournie par le deuxième élément de butée (67),
**caractérisée en ce que** la première butée terminale (4) est constituée d'un accouplement de butée métal/métal.

2. Vanne selon la revendication 1,
**caractérisée en ce que** le premier élément de butée (61) et la première surface de butée (81) associée forment une butée terminale plane (4).

3. Vanne selon la revendication 2,
**caractérisée en ce que** la butée terminale plane (4) est réalisée en tant que butée terminale métallique.

4. Vanne selon la revendication 1,
**caractérisée en ce que** la première surface de butée (81) est réalisée en tant que une surface annulaire (83).

5. Vanne selon la revendication 1,
**caractérisée en ce que** l'usure de la première surface de butée (81) ralentit ou s'arrête complètement dès que le deuxième élément de butée (67) intervient.

6. Vanne selon la revendication 4,
**caractérisée en ce que** le deuxième élément de butée (67) et l'organe de vanne (14) sont réalisés d'une seule pièce.

7. Vanne selon la revendication 1,
**caractérisée en ce que** l'organe de vanne (14) est constitué d'un matériau élastique et traverse la plaque d'induit (6), dans laquelle une première extrémité (15) de l'organe de vanne (14) est tournée vers le siège de vanne (12) et une deuxième extrémité (17) de l'organe de vanne (14) forme le deuxième élément de butée (67).

8. Vanne selon l'une des revendications 1 à 7,
**caractérisée en ce que** le premier élément de butée (61) et la première surface de butée (81) font partie du circuit magnétique (8) de l'unité d'entraînement électromagnétique (7) en formant une lame d'air (9).

9. Vanne selon la revendication 8,
**caractérisée en ce que** lors de l'application du premier élément de butée (61) de la plaque d'induit (6) contre la première surface de butée (81), le circuit magnétique (8) de l'unité d'entraînement électromagnétique (7) est fermé en formant une lame d'air (9).

10. Vanne selon la revendication 9,
**caractérisée en ce que** quand le circuit magnétique (8) de l'unité d'entraînement électromagnétique (7) est fermé, la sortie (2) de la vanne (1) est ouverte.

11. Vanne selon l'une des revendications 1 à 10,
**caractérisée en ce que** la plaque d'induit (6) peut être déplacée à l'encontre de la force d'un ressort de rappel (20).

12. Vanne selon l'une des revendications 1 à 11,
**caractérisée en ce que** le deuxième élément de butée (67) est maintenu par complémentarité de forme d'un côté supérieur (64) de la plaque d'induit (6) et d'un côté inférieur (65) de la plaque d'induit (6).
